# EUROPÄISCHE PATENTSCHRIFT

(11) **EP 3 234 528 B1**
(45) Veröffentlichungstag und Bekanntmachung des Hinweises auf die Patenterteilung: **23.01.2019**
(21) Anmeldenummer: 16775663.4
(22) Anmeldetag: 29.09.2016
(51) Int. Cl.: G01K 1/18, G01F 1/69

(54) **MESSGERÄT ZUR ERFASSUNG WENIGSTENS EINES PARAMETERS EINES FLUIDS**
MEASURING DEVICE FOR RECORDING AT LEAST ONE PARAMETER OF A FLUID
APPAREIL DE MESURE POUR LA DÉTECTION D'AU MOINS UN PARAMÈTRE D'UN FLUIDE

(30) Priorität: 19.10.2015 DE 102015117723
(43) Veröffentlichungstag der Anmeldung: 25.10.2017
(73) Patentinhaber: Kriwan Industrie-Elektronik GmbH, 74670 Forchtenberg (DE)
(72) Erfinder: ROSSMEISSL, Thomas, 74670 Ernsbach (DE); ELFENBEIN, Eduard, 74670 Forchtenberg (DE)
(74) Vertreter: Tetzner, Michael
(86) Internationale Anmeldenummer: PCT/EP2016/073213
(87) Internationale Veröffentlichungsnummer: WO 2017/067770

(56) Entgegenhaltungen:
- EP-A2- 2 037 247
- DE-A1- 19 640 772
- DE-A1-102009 046 653
- DE-U1- 7 909 350

## Beschreibung

Die Erfindung betrifft ein Messgerät zur Erfassung wenigstens eines Parameters eines Fluids, insbesondere eine Temperaturmesseinrichtung und/oder einen thermischen Strömungssensor zur Messung der Strömungsgeschwindigkeit des Fluids.

Thermische Strömungssensoren arbeiten nach dem kalorimetrischen Messprinzip, insbesondere nach der Hitzdrahtmethode. Hierbei wird ein Sensorbereich aufgeheizt, der durch das vorbeiströmende Medium gekühlt wird. Die dem Sensorbereich zuzuführende Leistung, um den Sensorbereich auf einer vorgegebenen Temperatur zu halten, stellt dabei in Abhängigkeit der Temperatur des Mediums ein Maß für die Strömungsgeschwindigkeit dar.

Aus der US 7,178,410 B2 ist ein Strömungssensor bekannt, der eine Wandung aufweist, die zumindest einen zylindrischen Abschnitt umfasst, der in ein halbkugelförmig ausgebildetes Ende übergeht, wobei im Inneren des Gehäuses ein Heizelement und ein Temperatursensor mit der Wandung des zylindrischen Abschnitts in Wärmestrahlung übertragenden Kontakt stehen.

Die DE 196 40 772 A1 offenbart ein Messsensor zur Erfassung der Strömungsgeschwindigkeit von Flüssigkeiten und Gasen, der ein mit dem Fluid in Kontakt kommendes Gehäuse aufweist, das einen zylindrischen Abschnitt umfasst, der in ein halbkugelförmig ausgebildetes Ende übergeht. Im Inneren des Gehäuses stehen elektrische Messelemente mit der Wandung in Wärmestrahlung übertragenden Kontakt.

Die EP 2 037 247 A2 offenbart einen Temperatursensor mit einem Luftspalt, der das Ende des Sensors vom Rest des Gehäuses isoliert. In der DE 10 2009 046653 A1 wird ein magnetisch-induktives Durchflussmesssystem mit beheizbarem Widerstandsthermometer beschreiben. Aus der DE 79 09 350 U1 ist ferner ein Temperaturfühler zum Messen von Gehäuse- und Werkzeugtemperaturen bekannt, der ein zylindrisches, thermisch isolierendes Gehäuse aufweist, in das eine Kappe aus einem wärmeleitfähigen Material eingesetzt ist.

Der Erfindung liegt die Aufgabe zugrunde, ein Messgerät zur Erfassung wenigstens eines Parameters eines Fluids anzugeben, das sich durch eine schnelle und zuverlässige Messwerterfassung auszeichnet.

Erfindungsgemäß wird diese Aufgabe durch die Merkmale des Anspruches 1 gelöst.

Das erfindungsgemäße Messgerät zur Erfassung wenigstens eines Parameters eines Fluids sieht ein mit dem Fluid in Kontakt kommendes Gehäuse vor, das eine Wandung aufweist, die zumindest einen zylindrischen Abschnitt umfasst, der in ein halbkugelförmig ausgebildetes Ende übergeht, und wobei im Inneren des Gehäuses wenigstens ein elektronisches Bauteil mit der Wandung in Wärmestrahlung übertragenden Kontakt steht. Ein Abschnitt des halbkugelförmig ausgebildeten Endes ist als Sensorkappe ausgebildet und besteht dabei aus einem wärmeleitfähigen Material, während der verbleibende Abschnitt des halbkugelförmig ausgebildeten Endes durch ein thermisch isolierendes Material gebildet wird, wobei das elektronische Bauteil mit der Sensorkappe in Kontakt steht.

Das halbkugelförmig ausgebildete Ende, die Anordnung des elektronischen Bauteils in der Sensorkappe und die Verwendung unterschiedlicher Materialien ermöglichen ein sehr schnelles, aber dennoch mechanisch stabiles und robustes Messgerät. Die Anordnung des elektronischen Bauteils im halbkugelförmig ausgebildeten Ende gewährleistet eine Richtungsabhängigkeit bei der Anordnung des Messgeräts.

Weitere Ausgestaltungen der Erfindung sind Gegenstand der Unteransprüche.

Gemäß einem bevorzugten Ausführungsbeispiel ist die Sensorkappe als Kugelsegment mit einer Höhe ausgebildet, die im Bereich des 0,1- bis 0,8-fachen, vorzugsweise im Bereich des 0,2- bis 0,6-fachen Radius des halbkugelförmig ausgebildete Endes liegt. Dadurch ist die Sensorkappe einerseits groß genug, um das elektronische Bauteil zu kontaktieren und anderseits klein genug, um eine ausreichende Stabilität des halbkugelförmig ausgebildeten Endes auch dann zu gewährleisten, wenn die Sensorkappe für einen guten Wärmeübergang mit einer geringen Wandstärke von beispielsweise 0,5 mm ausgebildet ist. Dadurch wird die Masse des wärmeleitfähigen Materials auf ein gerade noch für die mechanische Stabilität benötigtes Minimum reduziert, um dadurch die Geschwindigkeit des Ansprechverhaltens zu steigern.

Für das wärmeleitende Material der Sensorkappe wird eine Wärmeleitfähigkeit von wenigstens 300 W/mK und für das thermisch isolierende Material eine Wärmeleitfähigkeit von kleiner 1 W/mK bevorzugt. Als Materialien für die Sensorkappe kommen insbesondere Kupfer, Silber oder Aluminium und für den aus thermisch isolierendem Material bestehenden Abschnitt insbesondere Kunststoff, Glas oder Keramik in Betracht. Durch die sehr gute Wärmeleitfähigkeit der mit dem Fluid in Kontakt kommenden Sensorkappe wird ein sehr guter Wärmeübertragung zwischen Fluid und Sensor und dadurch ein sehr schnelles Ansprechverhalten ermöglicht.

Um eine ausreichende mechanische Stabilität zu gewährleisten, kann die Sensorkappe eine Wandstärke aufweisen, die kleiner als die Wandstärke des aus thermisch isolierendem Material bestehenden Abschnitts ist, wobei die Wandstärke des aus thermisch isolierendem Material bestehenden Abschnitts des halbkugelförmig ausgebildeten Endes beispielsweise 0,8 mm beträgt.

Gemäß einer weiteren Ausgestaltung der Erfindung ist der zylindrische Abschnitt zumindest an dem sich an das halbkugelförmig ausgebildete Ende anschließenden Bereich ebenfalls aus einem thermisch isolierendem Material, insbesondere aus Kunststoff, Glas oder Keramik, ausgebildet. Die Masse des angrenzenden zylindrischen Abschnitts wird durch die Anpassung der Wandstärke auf ein gerade noch für die mechanische Stabilität benötigtes Minimum reduziert (Durchmesser des zylindrischen Abschnitts beispielsweise 9 mm, Wandstärke im Bereich des halbkugelförmigen Endes beispielsweise 0,5 - 0,8 mm). Die Wandstärke des zylindrischen Abschnitts kann dabei mit zunehmendem Abstand vom halbkugelförmigen Ende ansteigen (insbesondere von ca. 0,5 - 0,8 mm am halbkugelförmigen Ende bis auf ca. 1 - 1,3 mm am Ende des zylindrischen Abschnitts). Dadurch wird die Wärmeleitung aus dem Messbereich in das Gehäuse trotz hoher mechanischer Festigkeit zusätzlich minimiert.

Des Weiteren ist es von Vorteil, wenn der zylindrische Abschnitt und das halbkugelförmig ausgebildete Ende im Übergangsbereich zwischen dem zylindrischen Abschnitt und dem halbkugelförmig ausgebildeten Ende den gleichen Außendurchmesser aufweisen und ein möglichst glatter Übergang auf der Außenseite vorhanden ist. Auch der Übergang an der Außenseite zwischen der Sensorkappe und dem verbleibenden Abschnitt des halbkugelförmig ausgebildeten Endes sollte ebenfalls möglichst glatt ausgeführt werden. Das Gehäuse wird darüber hinaus vorzugsweise rotationssymmetrisch ausgebildet, sodass insbesondere auch die Sensorkappe rotationssymmetrisch zur Längsachse des Messgerätes ausgerichtet ist. Auf diese Weise werden etwaige Turbulenzen bei einem strömendem Fluid vermieden. Auch kann sich in den Übergangsbereichen keine bzw. nur wenig Verschmutzung anlagern.

Bedingt durch die Kugelgeometrie und der Verwendung unterschiedlicher Materialien kann trotz geringer Wandstärken ein sehr schneller, aber dennoch mechanisch stabiler und robuster Sensor gebildet werden.

Bei dem elektronischen Bauteil kann es sich insbesondere um einen Temperatursensor und/oder ein Heizelement (beispielsweise einen temperaturabhängigen Widerstand) handeln. Die Anbringung des elektronischen Bauteils erfolgt vorzugsweise dadurch, dass es auf einer in das Gehäuse eingeschobenen Leiterplatte angeordnet ist, wobei das elektronische Bauteil mit der Sensorkappe verlötet wird. Dazu kann das elektronische Bauteil beispielsweise mit einem ersten Lot auf der Leiterplatte verlötet sein, während das elektronische Bauteil mit der Sensorkappe mit einem zweiten Lot verlötet wird. Um beim Verlöten des Bauteils mit der Sensorkappe ein Lösen des Bauteils von der Leiterplatte zu verhindern, weist das erste Lot einen um wenigstens 50°C höheren Schmelzpunkt als das zweite Lot auf. Die technische Realisierung kann dadurch erfolgen, dass das zweite Lot durch ein Lotformteil mit vorgegebener Masse gebildet wird, das vor dem Einschieben der Leiterplatte an dieser oder im Inneren des Gehäuses an der Sensorkappe platziert wird. Durch Erhitzten der Sensorkappe von außen schmilzt das Lotformteil, sodass es zu einer Kontaktierung des elektronischen Bauteils mit der Sensorkappe kommt. Das Erhitzen der Sensorkappe muss dabei mit einer Temperatur erfolgen, die höher als der Schmelzpunkt des Lötformteils, aber geringer als der Schmelzpunkt des ersten Lots ist.

Gemäß einem ersten Ausführungsbeispiel ist das Messgerät als Temperaturmesseinrichtung ausgebildet. Hierzu wird das elektronische Bauteil durch einen Temperatursensor (beispielsweise ein PT500, NTC, PTC etc.) gebildet. Der Wärmeübergangswiderstand vom Fluid durch die sehr gut wärmeleitfähige Sensorkappe über die sehr gut wärmeleitfähige Verbindung (Lot) zum Temperatursensor (beispielsweise ein temperaturabhängiger Widerstand) ist dabei so gering, dass dieser eine Temperaturänderung im Fluid sehr schnell erfasst. Der Wärmeübergangswiderstand zwischen der Sensorkappe und dem verbleibenden Abschnitt des halbkugelförmig ausgebildeten Endes und dem sich daran anschließenden zylindrischen Abschnitt ist dabei deutlich höher, so dass das Gehäuse deutlich langsamer auf Temperaturänderungen des Fluids reagiert. Bedingt durch die Wahl eines sehr gut wärmeleitfähigen Materials für die Sensorkappe können auch fertigungsbedingte Toleranzabweichungen in der Anbringung des Strömungssensors durch Verdrehung des Sensors bei strömendem Fluid ausgeglichen werden.

Gemäß einem zweiten Ausführungsbeispiel ist das Messgerät als Strömungssensor ausgebildet, wobei das mit der Sensorkappe in Kontakt stehende elektronische Bauteil durch ein Heizelement zum Zwecke des Aufheizens des Sensorkappe ausgebildet ist. Das Heizelement wird vorzugsweise als Heiz- und Temperaturfühlerelement (beispielsweise als temperaturabhängiger Widerstand) ausgebildet, wodurch einerseits Wärme an die Sensorkappe übertragen und andererseits die Temperatur der Sensorkappe ermittelt werden kann.

Gemäß einer weiteren Ausgestaltung weist der zylindrische Abschnitt des Gehäuses des Strömungssensors einen aus einem wärmeleitfähigen Material (insbesondere eine Wärmeleitfähigkeit von wenigstens 300 W/mK) bestehenden Temperaturfühlerabschnitt auf, der mit wenigstens einem im Inneren des Temperaturfühlerabschnitts angeordneten Temperatursensors in Wirkverbindung steht. Über eine Auswertungseinheit wird in bekannter Art und Weise die Strömungsgeschwindigkeit anhand einer dem Heizelement zugeführten Leistung und einer vom Temperatursensor gemessenen Temperatur des Mediums ermittelt.

Weitere Ausgestaltungen der Erfindung werden im Folgenden anhand der nachfolgenden Beschreibung und der Zeichnung näher erläutert.

In der Zeichnung zeigen
- Fig. 1: eine dreidimensionale Darstellung einer erfindungsgemäßen Temperaturmesseinrichtung,
- Fig. 2: eine Längsschnittdarstellung der Temperaturmesseinrichtung gemäß Fig.1,
- Fig. 3: eine Schnittdarstellung längs der Linie A - A der Fig. 2,
- Fig. 4: eine dreidimensionale Darstellung eines erfindungsgemäßen Strömungssensors,
- Fig. 5: eine Längsschnittdarstellung des Strömungssensors gemäß Fig.4,
- Fig. 6: eine Schnittdarstellung längs der Linie B - B der Fig. 5 und
- Fig.7: eine Längsschnittdarstellung des Messgeräts mit Lotformteil während des Zusammenbaus.

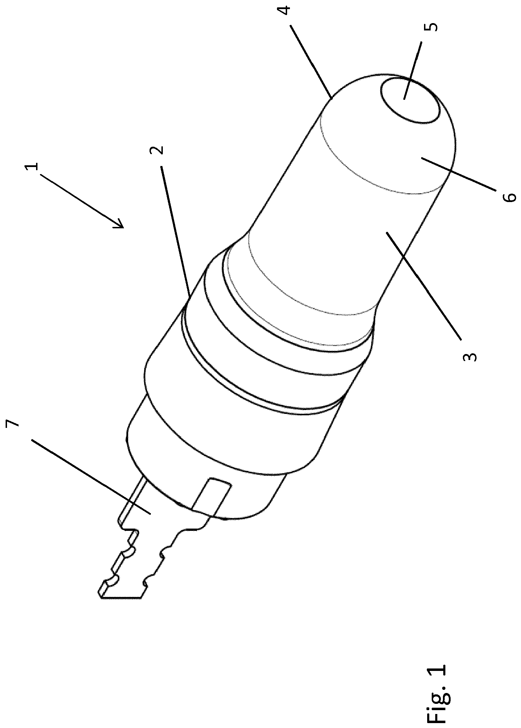

Bei dem in Fig. 1 dargestellten Messgerät handelt es sich um eine Temperaturmesseinrichtung 1 zur Erfassung der Temperatur eines Fluids. Sie weist ein mit dem Fluid in Kontakt kommendes Gehäuse 2 mit einer Wandung auf, die zumindest einen zylindrischen Abschnitt 3 umfasst, der in ein halbkugelförmig ausgebildetes Ende 4 übergeht. Dabei ist ein Abschnitt des halbkugelförmig ausgebildeten Endes 4 als Sensorkappe 5 aus einem wärmeleitfähigen Material und der verbleibende Abschnitt 6 des halbkugelförmig ausgebildeten Endes aus einem thermisch isolierenden Material ausgebildet.

Das insgesamt rohrförmig ausgebildete Gehäuse 2 ermöglicht das Einschieben einer Leiterplatte 7. Dazu können im Inneren des Gehäuses 2 Führungsnuten 8, 9 zum gezielten Einführen der Leiterplatte 7 vorgesehen werden. Auf der Leiterplatte 7 ist ein als Temperatursensor ausgebildetes elektronisches Bauteil 10 angeordnet, das im eingebauten Zustand mit der Sensorkappe 5 verlötet ist, sodass das elektronische Bauteil mit der Sensorkappe 5 in Wärmestrahlung übertragenden Kontakt steht.

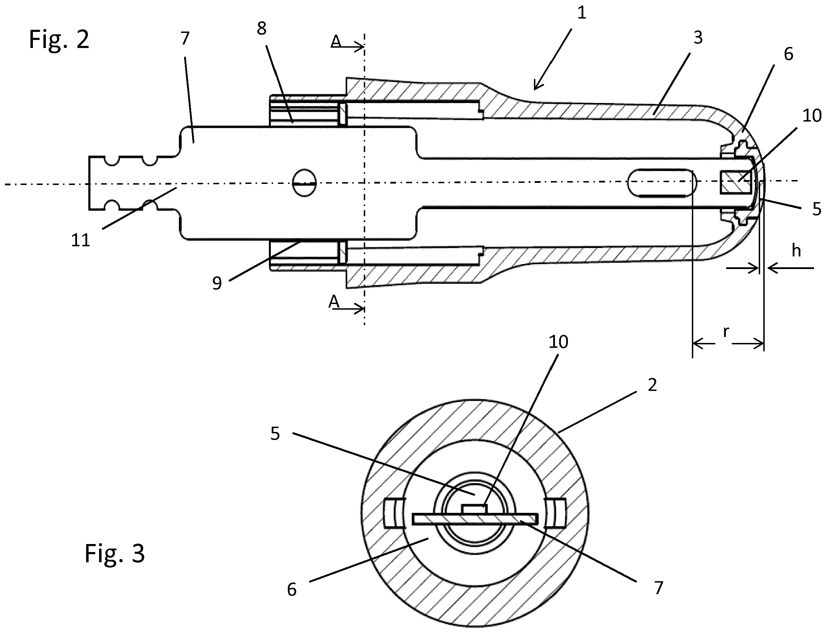

Die Sensorkappe 5 ist als Kugelsegment mit einer Höhe h ausgebildet, wobei die Höhe h im Bereich des 0,1- bis 0,8-fachen Radius r des halbkugelförmig ausgebildeten Endes, vorzugsweise im Bereich des 0,2- bis 0,6-fachen Radius liegt (Fig. 2).

Das wärmeleitende Material der Sensorkappe 5 weist vorzugsweise eine Wärmeleitfähigkeit von wenigstens 300 W/mK und das thermisch isolierende Material des verbleibenden Abschnitt 6 eine Wärmeleitfähigkeit von kleiner 1 W/mK auf. Als Material für die Sensorkappe kommt insbesondere Kupfer, Silber oder Aluminium und als thermisch isolierendes Material vorzugsweise Kunststoff, Glas oder Keramik in Betracht. Der zylindrische Abschnitt 3 ist zumindest an den sich an das halbkugelförmig ausgebildete Ende 4 anschließenden Bereich ebenfalls aus einem thermisch isolierenden Material, insbesondere aus Kunststoff, Glas oder Keramik, ausgebildet. Zweckmäßigerweise werden der zylindrische Abschnitt 3 und der verbleibende Abschnitt 6 des halbkugelförmig ausgebildeten Endes 4 einstückig, insbesondere als Kunststoffspritzgussteil, ausgebildet.

Wie sich aus Fig. 2 unmittelbar ergibt, sind die Übergänge zwischen dem zylindrischen Abschnitt 3 und dem aus thermisch isolierenden Material bestehenden, verbleibenden Abschnitt 6 des halbkugelförmigen ausgebildeten Endes 4 und der Sensorkappe 5 zumindest auf der Außenseite glatt ausgebildet. Die Sensorkappe 5 weist für einen guten Wärmeübergang beispielsweise eine relativ geringe Wandstärke von beispielsweise 0,5 mm auf, während die Wandstärke des verbleibenden Abschnitts 6 des halbkugelförmig ausgebildeten Endes beispielsweise 0,8 mm beträgt. Die Masse des angrenzenden zylindrischen Abschnitts 3 wird durch die Anpassung der Wandstärke auf ein gerade noch für die mechanische Stabilität benötigtes Minimum reduziert. Die Wandstärke des zylindrischen Abschnitts 3 kann dabei mit zunehmendem Abstand vom halbkugelförmigen Ende 4 von beispielsweise 0,8 auf 1,2 mm ansteigen. Der Durchmesser des zylindrischen Abschnitts 3 bzw. des halbkugelförmig ausgebildeten Ende beträgt beispielsweise 9 mm. Insgesamt ist das Gehäuse 2 rotationssymmetrisch um eine Längsachse 11 ausgebildet.

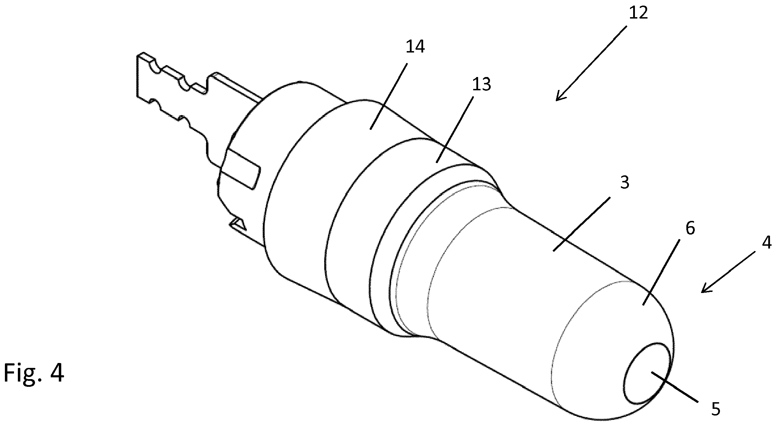

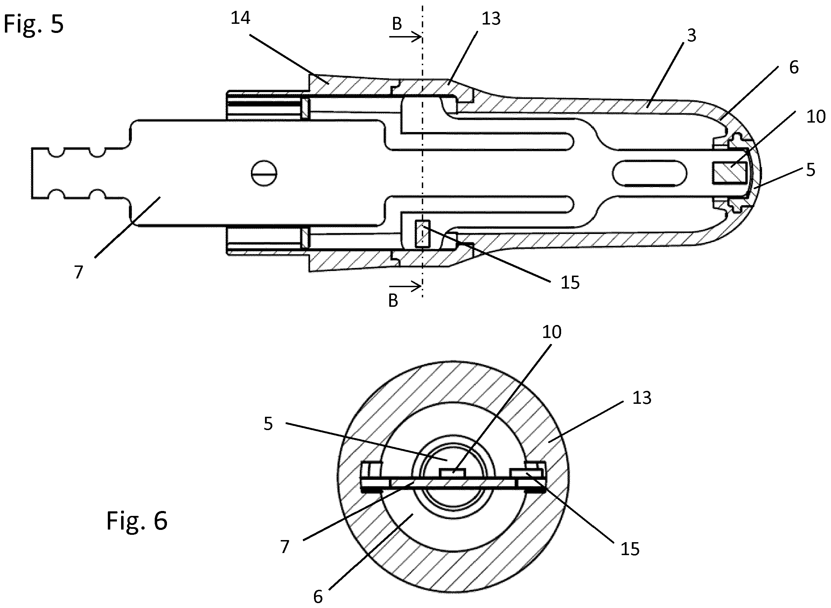

Das in den Fig. 4 bis 6 gezeigte zweite Ausführungsbeispiel eines erfindungsgemäßen Messgeräts stellt einen Strömungssensor 12 dar. Die äußere Form des Gehäuses des Strömungssensors 12 ist im Wesentlichen identisch ausgebildet; insbesondere im Bereich des zylindrischen Abschnitts 3 und dem halbkugelförmig ausgebildeten Ende 4 mit der Sensorkappe 5 und dem verbleibenden Abschnitt 6. An den zylindrischen Abschnitt 3 schließt sich allerdings am vom halbkugelförmig ausgebildeten Ende abgewandten Bereich ein aus einem wärmeleitfähigen Material bestehender Temperaturfühlerabschnitt 13 an, bevor ein weiterer thermisch isolierender Gehäuseabschnitt 14 folgt. Der Temperaturfühlerabschnitt 13 ist somit in etwa ringförmig zwischen dem zylindrischen Abschnitt 3 und dem thermisch isolierenden Gehäuseabschnitt 14 angeordnet.

Das mit der Sensorkappe in wärmeübertragenden Kontakt stehende elektronische Bauteil 10 wird bei diesem Ausführungsbeispiel durch ein Heizelement gebildet, das vorzugsweise sowohl zum Aufheizen der Sensorkappe 5 als auch zum Messen der Temperatur der Sensorkappe 5 verwendet werden kann. Hierfür eignet sich beispielsweise ein temperaturabhängiger Widerstand, der je nach Ansteuerung wahlweise als Temperatursensor oder Heizelement fungieren kann.

Der aus einem wärmeleitfähigen Material bestehende Temperaturfühlerabschnitt 13 steht mit wenigstens einem im Inneren des Gehäuses angeordneten Temperatursensor 15 in Wirkverbindung, welcher ebenfalls auf der Leiterplatte 7 angeordnet ist und über eine Lötverbindung mit dem Temperaturfühlerabschnitt 13 verbunden ist. Des Weiteren ist eine nicht näher dargestellte Auswertungseinheit zur Ermittlung der Strömungsgeschwindigkeit anhand einer dem Heizelement (elektronisches Bauteil 10) zugeführten Leistung und einer vom Temperatursensor 15 gemessenen Temperatur des Mediums vorgesehen. Dabei wird die Sensorkappe 5 über das Heizelement auf eine vorgegebene Temperatur aufgeheizt. Das Erreichen bzw. Halten der vorgegebenen Temperatur der Sensorkappe 5 wird durch einen weiteren mit der Sensorkappe 5 in Verbindung stehenden Temperatursensor oder geschickter Weise durch das elektronische Bauteil 10 selbst überwacht. Dazu muss das elektronische Bauteil sowohl als Heizelement als auch als Temperatursensor wirken können. Die Strömungsgeschwindigkeit kann dann anhand der über das elektronische Bauteil 10 zugeführten Heizleistung und die durch den Temperatursensor 15 im Temperaturfühlerabschnitt gemessene Temperatur des Fluids ermittelt werden. Diese Art der Ermittlung der Strömungsgeschwindigkeit ist allgemein bekannt und wird daher nicht näher erläutert.

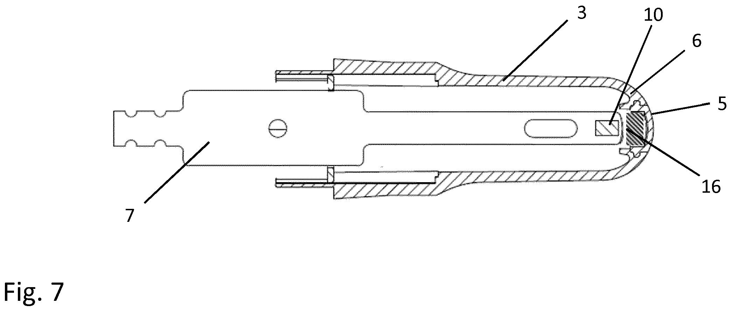

Anhand von Fig. 7 wird im Folgenden erläutert, wie die Kontaktierung zwischen dem elektronischen Bauteil 10 und der Sensorkappe 5 erreicht wird. Hierzu wird das elektronische Bauteil (vor dem Einführen der Leiterplatte 7 in das Gehäuse) mit einem ersten Lot auf der Leiterplatte verlötet. Dann wird ein Lotformteil 16 im Inneren des Gehäuses an der Sensorkappe 5 platziert, um anschließend die Leiterplatte 7 in das Gehäuse einzuschieben, bis das auf der Leiterplatte 7 angelötete elektronische Bauteil 10 mit dem Lotformteil 16 in Kontakt kommt. Die Kontaktierung des elektronischen Bauteils 10 mit der Sensorkappe 5 erfolgt durch Erwärmen der Sensorkappe von außen, bis das Lotformteil schmilzt. Damit sich das elektronische Bauteil 10 hierbei nicht von der Leiterplatte löst, sollte das ersten Lot, mit dem das elektronische Bauteil 10 auf der Leiterplatte 7 befestigt ist einen um wenigstens 50°C höheren Schmelzpunkt als das zweite Lot aufweisen. Die Sensorkappe 5 wird zur Kontaktierung mit dem elektronischen Bauteil nur auf eine Temperatur aufgeheizt, die höher als der Schmelzpunkt des zweiten Lots aber geringer als der Schmelzpunkt des ersten Lots ist. Mit dieser Methode lässt sich eine reproduzierbare Kontaktierung des elektronischen Bauteils 10 mit der Sensorkappe 5 erreichen. In gleicher Art und Weise kann der Temperatursensor 15 mit dem Temperaturfühlerabschnitt 13 des Gehäuses von außen kontaktiert werden.

## Patentansprüche

1. Messgerät zur Erfassung wenigstens eines Parameters eines Fluids mit einem mit dem Fluid in Kontakt kommenden Gehäuse (2), das eine Wandung aufweist, die zumindest einen zylindrischen Abschnitt (3) umfasst, der in ein halbkugelförmig ausgebildetes Ende (4) übergeht, und wobei im Inneren des Gehäuses wenigstens ein elektronisches Bauteil (10) mit der Wandung in Wärmestrahlung übertragenden Kontakt steht,
**dadurch gekennzeichnet, dass** ein Abschnitt des halbkugelförmig ausgebildeten Endes (4) als Sensorkappe (5) aus einem wärmeleitfähigen Material und der verbleibende Abschnitt (6) des halbkugelförmig ausgebildeten Endes (4) aus einem thermisch isolierenden Material besteht und das elektronische Bauteil (10) mit der Sensorkappe (5) in Kontakt steht.

2. Messgerät nach Anspruch 1, **dadurch gekennzeichnet, dass** das halbkugelförmig ausgebildete Ende (4) einen Radius (r) aufweist und die Sensorkappe (5) als Kugelsegment mit einer Höhe (h) ausgebildet ist, wobei die Höhe im Bereich des 0,1- bis 0,8-fachen Radius, vorzugsweise im Bereich des 0,2- bis 0,6-fachen Radius liegt.

3. Messgerät nach Anspruch 1, **dadurch gekennzeichnet, dass** das wärmeleitende Material der Sensorkappe (5) eine Wärmeleitfähigkeit von wenigstens 300 W/mK und das thermisch isolierende Material eine Wärmeleitfähigkeit von kleiner 1 W/mK aufweisen.

4. Messgerät nach Anspruch 1, **dadurch gekennzeichnet, dass** das die Sensorkappe (5) eine Wandstärke aufweist, die kleiner als die Wandstärke des aus thermisch isolierendem Material bestehenden Abschnitts ist.

5. Messgerät nach Anspruch 1, **dadurch gekennzeichnet, dass** die Sensorkappe (5) aus Kupfer, Silber oder Aluminium und der aus thermisch isolierendem Material bestehende Abschnitt aus Kunststoff, Glas oder Keramik bestehen.

6. Messgerät nach Anspruch 1, **dadurch gekennzeichnet, dass** der zylindrische Abschnitt (3) und das halbkugelförmig ausgebildete Ende (4) im Übergangsbereich zwischen dem zylindrischen Abschnitt und dem halbkugelförmig ausgebildeten Ende den gleichen Außendurchmesser aufweisen.

7. Messgerät nach Anspruch 1, **dadurch gekennzeichnet, dass** der zylindrische Abschnitt 83) zumindest an den sich an das halbkugelförmig ausgebildete Ende (4) anschließenden Bereich ebenfalls aus einem thermisch isolierendem Material, insbesondere aus Kunststoff, Glas oder Keramik, ausgebildet ist.

8. Messgerät nach Anspruch 7, **dadurch gekennzeichnet, dass** der zylindrische, aus dem thermisch isolierenden Material bestehende Abschnitt (3) eine Wandstärke aufweist, die mit zunehmendem Abstand vom halbkugelförmig ausgebildeten Ende (4) ansteigt.

9. Messgerät nach Anspruch 1, **dadurch gekennzeichnet, dass** die Übergänge zwischen dem zylindrischen Abschnitt (3), dem aus thermisch isolierenden Material bestehenden Abschnitt (6) des halbkugelförmigen ausgebildeten Endes und der Sensorkappe (5) glatt ausgebildet sind.

10. Messgerät nach Anspruch 1, **dadurch gekennzeichnet, dass** es sich bei dem elektronischen Bauteil (10) um einen Temperatursensor und/oder ein Heizelement handelt.

11. Messgerät nach Anspruch 1, **dadurch gekennzeichnet, dass** es sich bei dem elektronischen Bauteil (10) um einen temperaturabhängigen Widerstand handelt.

12. Messgerät nach Anspruch 1, **dadurch gekennzeichnet, dass** der zylindrische Abschnitt (3) des Gehäuses einen aus einem wärmeleitfähigen Material bestehenden Temperaturfühlerabschnitt (13) aufweist, der mit wenigstens einem im Inneren des Temperaturfühlerabschnitts angeordneten Temperatursensor (15) in Wirkverbindung steht.

13. Messgerät nach Anspruch 12, **dadurch gekennzeichnet, dass** das Messgerät als Strömungssensor (12) ausgebildet ist und das mit der Sensorkappe (5) in Kontakt stehende elektronische Bauteil (10) durch ein Heizelement zum Zwecke des Aufheizens des Sensorkappe ausgebildet ist.

14. Messgerät nach Anspruch 13, **dadurch gekennzeichnet, dass** eine Auswertungseinheit zur Ermittlung der Strömungsgeschwindigkeit anhand einer dem Heizelement zugeführten Leistung und einer vom Temperatursensor (15) gemessenen Temperatur des Mediums vorgesehen ist.

15. Messgerät nach Anspruch 1, **dadurch gekennzeichnet, dass** das Gehäuse (2) rotationssymmetrisch ausgebildet ist.

16. Messgerät nach Anspruch 1, **dadurch gekennzeichnet, dass** das Messgerät als Temperaturmesseinrichtung (1) ausgebildet ist.

17. Messgerät nach Anspruch 1, **dadurch gekennzeichnet, dass** das elektronische Bauteil (10) auf einer in das Gehäuse eingeschobenen Leiterplatte (7) angeordnet ist und das elektronische Bauteil (10) mit der Sensorkappe (5) verlötet ist.

18. Messgerät nach Anspruch 17, **dadurch gekennzeichnet, dass** das elektronische Bauteil (10) mit einem ersten Lot auf der Leiterplatte (7) verlötet ist und das elektronische Bauteil (10) mit der Sensorkappe (5) mit einem zweiten Lot verlötet ist, wobei das ersten Lot einen um wenigstens 50°C höheren Schmelzpunkt als das zweite Lot aufweist.

19. Messgerät nach Anspruch 18, **dadurch gekennzeichnet, dass** das zweite Lot durch ein Lotformteil (16) mit vorgegebener Masse gebildet wird, das vor dem Einschieben der Leiterplatte (7) im Inneren des Gehäuses (2) an der Sensorkappe (5) platziert ist.

## Claims

1. A measuring device for detecting at least one parameter of a fluid, including a housing (2) that comes into contact with the fluid, and that has a wall that includes at least one cylindrical section (3) that merges into an end (4) having a hemispherical design, and wherein at least one electronic component (10) is in heat radiation-transmitting contact with the wall in the interior of the housing,
**characterized in that** a section of the hemispherical end (4), as a sensor cap (5), is made of a thermally conductive material and the remaining section (6) of the hemispherical end (4) is made of a thermally insulating material, and the electronic component (10) is in contact with the sensor cap (5).

2. The measuring device according to Claim 1, **characterized in that** the hemispherical end (4) has a radius (r), and the sensor cap (5) is designed as a spherical segment having a height (h), wherein the height is in the range of 0.1 to 0.8 times the radius, preferably in the range of 0.2 to 0.6 times the radius.

3. The measuring device according to Claim 1, **characterized in that** the thermally conductive material of the sensor cap (5) has a heat conductivity of at least 300 W/mK, and the thermally insulating material has a heat conductivity of less than 1 W/mK.

4. The measuring device according to Claim 1, **characterized in that** the sensor cap (5) has a wall thickness that is less than the wall thickness of the section made of thermally insulating material.

5. The measuring device according to Claim 1, **characterized in that** the sensor cap (5) is made of copper, silver, or aluminum, and the section made of thermally insulating material is made of plastic, glass, or ceramic.

6. The measuring device according to Claim 1, **characterized in that** the cylindrical section (3) and the hemispherical end (4) have the same outer diameter in the transition region between the cylindrical section and the hemispherical end.

7. The measuring device according to Claim 1, **characterized in that** the cylindrical section (3), at least at the area adjoining the hemispherical end (4), is likewise made of a thermally insulating material, in particular plastic, glass, or ceramic.

8. The measuring device according to Claim 7, **characterized in that** the cylindrical section (3) made of the thermally insulating material has a wall thickness that increases with increasing distance from the hemispherical end (4).

9. The measuring device according to Claim 1, **characterized in that** the transitions between the cylindrical section (3), the section (6) of the hemispherical end made of thermally insulating material, and the sensor cap (5) have a smooth design.

10. The measuring device according to Claim 1, **characterized in that** the electronic component (10) is a temperature sensor and/or a heating element.

11. The measuring device according to Claim 1, **characterized in that** the electronic component (10) is a temperature-dependent resistor.

12. The measuring device according to Claim 1, **characterized in that** the cylindrical section (3) of the housing has a temperature sensor section (13) that is made of a thermally conductive material, and that is in operative connection with at least one temperature sensor (15) situated in the interior of the temperature sensor section.

13. The measuring device according to Claim 12, **characterized in that** the measuring device is designed as a flow sensor (12), and the electronic component (10) in contact with the sensor cap (5) is formed by a heating element for purposes of heating the sensor cap.

14. The measuring device according to Claim 13, **characterized in that** an evaluation unit is provided for determining the flow velocity based on power supplied to the heating element, and a temperature of the medium measured by the temperature sensor (15).

15. The measuring device according to Claim 1, **characterized in that** the housing (2) has a rotationally symmetrical design.

16. The measuring device according to Claim 1, **characterized in that** the measuring device is designed as a temperature measuring device (1).

17. The measuring device according to Claim 1, **characterized in that** the electronic component (10) is situated on a circuit board (7) that is inserted into the housing, and the electronic component (10) is soldered to the sensor cap (5) .

18. The measuring device according to Claim 17, **characterized in that** the electronic component (10) is soldered to the circuit board (7) with a first solder and the electronic component (10) is soldered to the sensor cap (5) with a second solder, wherein the first solder has a melting point that is at least 50°C higher than that of the second solder.

19. The measuring device according to Claim 18, **characterized in that** the second solder is formed by a solder preform (16) that has a specified mass, and that is placed on the sensor cap (5) prior to inserting the circuit board (7) into the interior of the housing (2).

## Revendications

1. Appareil de mesure pour la détection d'au moins un paramètre d'un fluide, avec un boîtier (2) venant au contact du fluide, lequel boîtier présente une paroi qui comprend au moins une partie cylindrique (3) qui se transforme en une extrémité (4) configurée en ayant une forme hémisphérique, et où au moins un composant électronique (10) est en contact, à l'intérieur du boîtier, avec la paroi, ledit contact transmettant le rayonnement thermique,
**caractérisé en ce qu'**une partie de l'extrémité (4) configurée en ayant une forme hémisphérique et servant de capuchon de capteur (5) se compose d'un matériau thermoconductible, et la partie restante (6) de l'extrémité (4) configurée en ayant une forme hémisphérique se compose d'un matériau thermo-isolant, et le composant électronique (10) est en contact avec le capuchon de capteur (5).

2. Appareil de mesure selon la revendication 1, **caractérisé en ce que** l'extrémité (4) configurée en ayant une forme hémisphérique présente un rayon (r), et le capuchon de capteur (5) est configuré comme un segment sphérique ayant une hauteur (h), où la hauteur se situe dans la plage comprise entre 0,1 fois et 0,8 fois le rayon, de préférence dans la plage comprise entre 0,2 fois et 0,6 fois le rayon.

3. Appareil de mesure selon la revendication 1, **caractérisé en ce que** le matériau thermoconducteur du capuchon de capteur (5) présente une conductibilité thermique au moins de 300 W/mK, et le matériau thermo-isolant présente une conductibilité thermique inférieure à 1 W/mK.

4. Appareil de mesure selon la revendication 1, **caractérisé en ce que** le capuchon de capteur (5) présente une épaisseur de paroi qui est inférieure à l'épaisseur de paroi de la partie se composant du matériau thermo-isolant.

5. Appareil de mesure selon la revendication 1, **caractérisé en ce que** le capuchon de capteur (5) est en cuivre, en argent ou en aluminium, et la partie se composant du matériau thermo-isolant est en matière plastique, en verre ou en céramique.

6. Appareil de mesure selon la revendication 1, **caractérisé en ce que** la partie cylindrique (3) et l'extrémité (4) configurée en ayant une forme hémisphérique présentent le même diamètre extérieur dans la zone de transition comprise entre la partie cylindrique et l'extrémité configurée en ayant une forme hémisphérique.

7. Appareil de mesure selon la revendication 1, **caractérisé en ce que** la partie cylindrique (3), au moins au niveau de la zone se raccordant à l'extrémité (4) configurée en ayant une forme hémisphérique, est configurée également en étant composée d'un matériau thermo-isolant, en particulier en étant composée de matière plastique, de verre ou de céramique.

8. Appareil de mesure selon la revendication 7, **caractérisé en ce que** la partie cylindrique (3) se composant du matériau thermo-isolant présente une épaisseur de paroi qui s'accroît au fur et à mesure que la distance augmente par rapport à l'extrémité (4) configurée en ayant une forme hémisphérique.

9. Appareil de mesure selon la revendication 1, **caractérisé en ce que** les zones de transition comprises entre la partie cylindrique (3), la partie (6) de l'extrémité configurée en ayant une forme hémisphérique, ladite partie se composant d'un matériau thermo-isolant, et le capuchon de capteur (5), sont configurées en étant lisses.

10. Appareil de mesure selon la revendication 1, **caractérisé en ce que**, concernant le composant électronique (10), il s'agit d'un capteur de température et/ou d'un élément chauffant.

11. Appareil de mesure selon la revendication 1, **caractérisé en ce que**, concernant le composant électronique (10), il s'agit d'une résistance active en fonction de la température.

12. Appareil de mesure selon la revendication 1, **caractérisé en ce que** la partie cylindrique (3) du boîtier présente une partie de sonde de température (13) se composant d'un matériau thermoconductible, laquelle partie de sonde de température est en liaison active avec au moins un capteur de température (15) disposé à l'intérieur de la partie de sonde de température.

13. Appareil de mesure selon la revendication 12, **caractérisé en ce que** l'appareil de mesure est configuré comme un capteur de flux (12), et le composant électronique (10) se trouvant en contact avec le capuchon de capteur (5) est disposé en étant formé par un élément chauffant servant au chauffage du capuchon de capteur.

14. Appareil de mesure selon la revendication 13, **caractérisé en ce qu'**il est prévu une unité d'évaluation servant à la détermination de la vitesse d'écoulement, à l'aide d'une puissance fournie à l'élément chauffant et à l'aide d'une température du milieu, ladite température étant mesurée par le capteur de température (15).

15. Appareil de mesure selon la revendication 1, **caractérisé en ce que** le boîtier (2) est configuré en étant à symétrie de rotation.

16. Appareil de mesure selon la revendication 1, **caractérisé en ce que** l'appareil de mesure est configuré comme un dispositif de mesure de température (1).

17. Appareil de mesure selon la revendication 1, **caractérisé en ce que** le composant électronique (10) est disposé sur une carte de circuit imprimé (7) insérée dans le boîtier, et le composant électronique (10) est brasé avec le capuchon de capteur (5).

18. Appareil de mesure selon la revendication 17, **caractérisé en ce que** le composant électronique (10) est brasé, avec un premier matériau de brasure, sur la carte de circuit imprimé (7), et l'ensemble formé par le composant électronique (10) et par le capuchon de capteur (5) est brasé avec un second matériau de brasure, où le premier matériau de brasure présente un point de fusion au moins de 50°C supérieur à celui du second matériau de brasure.

19. Appareil de mesure selon la revendication 18, **caractérisé en ce que** le second matériau de brasure est formé par une préforme de brasure (16) ayant une masse prédéfinie, laquelle préforme de brasure est placée sur le capuchon de capteur (5) avant l'insertion de la carte de circuit imprimé (7) à l'intérieur du boîtier (2).
